Europäisches Patentamt

(19) European Patent Office

Office européen des brevets

(11) Numéro de publication : **0 039 287**
**B1**

(12) ## FASCICULE DE BREVET EUROPÉEN

(45) Date de publication du fascicule du brevet :
22.06.83

(21) Numéro de dépôt : **81400647.4**

(22) Date de dépôt : **23.04.81**

(51) Int. Cl.³ : **A 23 P 1/00**, A 23 L 1/20,
H 05 B 6/64

(54) Procédé de traitement par micro-ondes de produits alimentaires en vue de l'amélioration de leur valeur nutritionnelle.

(30) Priorité : 24.04.80 FR 8009288

(43) Date de publication de la demande :
04.11.81 Bulletin 81/44

(45) Mention de la délivrance du brevet :
22.06.83 Bulletin 83/25

(84) Etats contractants désignés :
AT BE CH DE GB IT LI LU NL SE

(56) Documents cités :
CA A 1 061 867
DE B 1 123 063
FR A 2 262 945
FR A 2 382 201
US A 3 620 764
US A 3 875 361
BROWN BOVERI MITTEILUNGEN, vol. 62,
no. 1/2, 1975 T. HAFNER : « Schadlose Behandlung von Nahrungsmittelvorräten durch Hochfrequenzwärme », pages 52-55.
JOURNAL OF AMERICAN OIL CHEMIST'S
SOCIETY, vol. 55, no. 10, 1978 H. MEDEIROS :
« Microwave inactivation of thioglucosidase in
intact crambe seeds », pages 679-682.

(73) Titulaire : Etablissement public dit : INSTITUT NATIO-
NAL DE LA RECHERCHE AGRONOMIQUE
149, rue de Grenelle
F-75341 Paris Cedex 07 (FR)

CHAMBRE D'AGRICULTURE D'EURE ET LOIR
Avenue Marcel Proust .
F-28024 Chartres (FR)

(72) Inventeur : Staron, Thadée Joseph
Avenue du Maréchal Leclerc
F-28110 Luce (FR)
Inventeur : Perrin, Louis
Les Mousseaux Saluperce
F-28190 Courville Sur Eure (FR)

(74) Mandataire : Phélip, Bruno et al
c/o Cabinet Harlé & Phélip 21, rue de La Rochefoucauld
F-75009 Paris (FR)

Procédé de traitement par micro-ondes de produits alimentaires en vue de l'amélioration
de leur valeur nutritionnelle

La présente invention concerne un procédé de traitement de produits alimentaires, destinés en particulier à l'alimentation animale, en vue de l'amélioration de leur valeur nutritionnelle.

La plupart des produits biologiques (les plantes, les graines, les fruits, les tubercules, les racines, lorsqu'ils sont récoltés, les animaux sacrifiés et leurs tissus, les aliments et produits similaires) subissent des traitements divers avant d'être consommés. Les traitements sont appliqués dans le but d'éviter les pertes, d'assurer la conservation, le stockage, les transports, les transformations, la détoxification, l'amélioration gustative et digestive des denrées rapidement périssables. Ces traitements font appel à des méthodes physiques, chimiques, physico-chimiques et biologiques qui sont : la dessiccation, la cuisson, le froid, l'irradiation, la fumigation, les conservateurs et la fermentation.

Selon leurs origines et leurs destinations, les produits biologiques subissent généralement plusieurs traitements conjugués qui permettent entre autres de contrôler l'évolution enzymatique, d'éviter la germination et les altérations bactériennes et fongiques, d'inhiber le développement des insectes et analogues.

Les micro-ondes ont déjà été largement utilisées pour le traitement des aliments, notamment pour ceux destinés à l'alimentation humaine. En effet il est connu que de très nombreuses denrées alimentaires ne sont consommables qu'à l'état cuit, car elles comportent à l'état cru des produits indigestes, des substances anti-nutritionnelles et toxiques, des flaveurs désagréables, etc... De ce fait, la cuisson, lorsqu'elle est nécessaire, est systématiquement appliquée aux aliments destinés à l'homme, par contre, la distribution des produits crus aux animaux est courante, alors qu'il est maintenant bien démontré que la cuisson favorise la digestibilité et augmente la valeur biologique du bol alimentaire chez tous les animaux (monogastriques et polygastriques).

Jusqu'à présent, à la connaissance de la demanderesse, les traitements thermiques des produits alimentaires par pertes diélectriques ont consisté à soumettre lesdits produits alimentaires à des champs électromagnétiques quelconques et à observer l'évolution thermique correspondant au temps d'irradiation par micro-ondes. Ces traitements thermiques, réalisés dans des conditions non contrôlées, dénaturent, en partie ou totalement, certains constituants des produits alimentaires ainsi traités, et il en résulte une détérioration notable de la valeur nutritionnelle desdits produits alimentaires.

A titre de documents illustrant l'état de la technique dans ce domaine on citera les documents ci-après.

— Le brevet DE-B-1.123.063 qui concerne un procédé de chauffage par micro-ondes de substances contenues dans des récipients fermés ne conduisant pas l'électricité. Il s'agit d'un procédé de régulation pour atteindre une température finale définie.

Ce procédé consiste à diviser l'énergie micro-ondes en deux parties. La majeure partie est utilisée pour chauffer les substances à traiter, en continu ou en discontinu, dans une enceinte de travail, tandis que la petite partie est utilisée pour chauffer des fantômes de mesure dans une enceinte de mesure, dans laquelle la différence de températures des fantômes atteinte pendant le chauffage est déterminée et est utilisée pour réguler la vitesse de passage des produits ou la puissance du générateur.

Il est indiqué que la fréquence des micro-ondes ne doit changer qu'à l'intérieur d'un domaine défini et que les objets traités ne changent pas, à l'intérieur de ce domaine de fréquences, leur constante diélectrique et/ou leur perte d'angle. D'autre part la température de départ doit toujours être la même.

— Le brevet FR 75 06 540, publié sous le n° 2.262.945, concerne un four à haute fréquence comportant un dispositif générateur d'ondes, un dispositif de réglage de temps de cuisson, caractérisé en ce qu'il possède une échelle graduée permettant de fixer un temps de cuisson optimal pour un produit alimentaire sélectionné, un dispositif de contrôle de la quantité d'énergie haute-fréquence délivrée pour obtenir la quantité optimale d'énergie HF correspondant à un produit de cuisson sélectionné par ledit dispositif de sélection et un système actif pour commander ledit dispositif de contrôle de la quantité d'énergie HF délivrée.

— Le brevet CA-A-1.061.867 concerne un procédé et un dispositif pour traiter des végétaux contenant une enzyme anti-trypsine de manière à détruire cette enzyme.

Ce procédé consiste à soumettre les végétaux à une énergie micro-onde à l'intérieur d'un espace confiné allongé, en introduisant la matière végétale dans ledit espace, sous une forme compactée et en faisant circuler de l'air chaud dans ledit espace pour éliminer l'humidité, le courant d'air chaud étant transversal à la direction de l'alimentation de la matière végétale. Le procédé décrit dans ce brevet permet de réduire la quantité d'énergie nécessaire selon les procédés classiques.

— L'article de T. HAFNER dans « Brown Boveri Mitteilungen » vol. 62 n° 1/2 (1975), concerne le traitement inoffensif de produits alimentaires par chauffage haute fréquence. Il est indiqué que la quantité de chaleur, qui est produite dans un produit pour la destruction de parasites par des oscillations moléculaires à haute fréquence, dépend d'abord des caractéristiques du produit traité, telles que la constante diélectrique $\varepsilon$ et le facteur de pertes tg $\delta$ ; la relation bien connue entre la puissance dissipée et les caractéristiques du produit est indiquée ($P = k\ U^2\ \varepsilon$ tg $\delta$).

— L'article de H. MEDEIROS et al dans « J. Amer. Oil. Chem. Soc. » vol. 55 n° 10 (1978) concerne l'inactivation de thioglucosidase dans les graines de crambe et plus particulièrement les conditions optimales nécessaires pour obtenir cette inactivation. L'humidité relative des graines est une caractéristique importante qui doit être prise en considération pour obtenir cette inactivation.

Aucun des documents ci-dessus ne décrit un procédé de traitement par irradiation, à l'aide de micro-ondes, de produits alimentaires pour améliorer leur valeur nutritionnelle dans des conditions contrôlées de manière à atteindre les caractéristiques diélectriques de l'état désiré du produit alimentaire.

On peut également citer, au titre de l'arrière plan technologique, les brevets US-A-3.875.361 ; US-A-3.620.764 et FR 77 06 002 publié sous le n° 2.382.201.

On a maintenant trouvé que la valeur nutritionnelle des produits alimentaires, destinés en particulier à l'alimentation animale, peut être considérablement améliorée par une irradiation à l'aide de micro-ondes réalisée de manière contrôlée.

La présente invention concerne donc un procédé de traitement de produits alimentaires, destinés en particulier à l'alimentation animale, qui consiste à soumettre lesdits produits alimentaires à une irradiation par micro-ondes, et est caractérisé en ce qu'on détermine, au préalable, sur un échantillon du produit à traiter, les caractéristiques diélectriques, lesquelles sont représentatives des états du produit, en fonction des paramètres d'irradiation et en particulier de la durée de l'irradiation à une fréquence et une puissance déterminées, et en ce qu'on conduit de manière contrôlée l'irradiation en vue du traitement proprement dit en tenant compte des résultats des déterminations préalables et en réalisant ladite irradiation avec les paramètres correspondant à l'état désiré dudit produit.

On sait que l'application d'un champ électrique continu à une matière électriquement susceptible, aligne les molécules de celle-ci parallèlement au champ comme s'il s'agissait de micro-aimants. Dans un champ électrique alternatif à grande fréquence (plusieurs milliards de périodes/seconde), les aimants-molécules ne peuvent suivre les lignes de champs du fait des forces d'inertie. C'est donc en heurtant ces forces d'inertie que l'énergie micro-ondes se transforme en chaleur. Par contre, lorsque le matériau traité est électriquement neutre, l'énergie micro-ondes traverse celui-ci comme s'il n'existait pas.

La puissance dissipée (P) et la profondeur de pénétration (D) des micro-ondes se calculent selon les deux formules ci-après :

$$P \ watt/cm^3 = 0{,}556 \cdot 10^{-12} \cdot f \cdot E^2 \, \varepsilon'r \ tg \ \delta$$

$$D = \lambda o / 2 \, \pi \ \sqrt{\varepsilon'} r \ tg \ \delta$$

f = fréquence en Hertz
E = champ électrique (Volts/cm)
$\varepsilon'r \ tg \ \delta$ = facteur de perte du produit
$\lambda o$ = longueur d'onde dans l'air

Ainsi donc, la puissance dissipée est proportionnelle à la fréquence, au facteur de perte et au carré de la valeur du champ électrique, alors que la profondeur de pénétration des micro-ondes est inversement proportionnelle au facteur de perte et à la fréquence (plus $f$ est élevé, plus $\lambda o$ est faible).

On rappellera que les micro-ondes se situent entre les infra-rouges et les ondes courtes radioélectriques ; ce sont les ondes UHF (ultra haute fréquence) et les ondes SHF (super haute fréquence) qui se situent entre 300 MHz et 30 GHz.

Pour les applications industrielles, scientifiques et médicales des micro-ondes, une convention internationale autorise l'utilisation des fréquences et longueurs d'ondes suivantes :

915 MHz = 32,8 cm
2 450 MHz = 12,2 cm
5 800 MHz = 5,2 cm
24 125 MHz = 1,24 cm

La capacité d'absorption de l'énergie d'un produit susceptible, exposé à un champ de micro-ondes, dépend de la valeur du champ électrique et des caractéristiques diélectriques du produit. Elle se concrétise par une élévation instantanée de la température dans la masse du produit.

Les pertes diélectriques d'un produit soumis à un champ de micro-ondes évoluent avec l'élévation de la température et les états de structure qui s'établissent au cours de cette élévation. Les variations d'absorption d'énergie observées et les élévations instantanées de températures correspondent à de multiples états transitoires de pertes diélectriques. Au-delà de ces phases mobiles, les pertes diélectriques se stabilisent, ce qui signifie que l'état physico-chimique du produit est transformé et devient stable pour la bande de fréquence utilisée.

Ainsi, les matières organiques susceptibles, telles que les produits alimentaires, peuvent, selon leur constitution, lorsqu'elles sont soumises à un champ de micro-ondes, passer par une suite d'états transitoires avant de devenir stables pour la bande de fréquence utilisée voisine de la fréquence de résonance du produit traité.

On a trouvé, de façon surprenante, qu'au-delà de l'un au moins de ces états transitoires, qui varient en fonction de la nature physico-chimique du produit alimentaire considéré, on atteint un état du produit, qui est désiré du fait qu'il confère audit produit une valeur nutritionnelle améliorée.

Par « état désiré du produit » on désigne tout état du produit qui résulte d'une modification quelconque dudit produit, telle qu'une transformation de l'un au moins des constituants dudit produit,

3

une destruction d'un des constituants indésirables du produit ou une combinaison d'une ou plusieurs transformations et/ou destructions.

Par exemple, la modification peut correspondre :

— à une transformation de l'amidon des produits alimentaires en contenant qui confère une amélioration de la valeur énergétique de ces produits ;

— à un éclatement des grains des produits alimentaires si ceux-ci sont présents à l'état de grains, qui fournit des produits alimentaires dont les constituants nutritionnels sont libérés, facilitant ainsi la digestibilité de ces produits ;

— à une désintégration des cellules de micro-organismes utilisés comme produits alimentaires pour l'homme ou l'animal ;

— à une augmentation de l'efficacité des protéines des produits alimentaires, ou

— à une destruction substantielle des substances anti-nutritionnelles et toxiques, des flaveurs désagréables et des impuretés indésirables, telles que les microorganismes et les insectes, contenues dans les produits alimentaires destinés à l'alimentation animale.

Comme indiqué précédemment, la modification peut correspondre à une combinaison de une ou plusieurs transformations et/ou destructions.

On a par exemple trouvé que l'application de micro-ondes, selon le procédé de l'invention, à du riz, après dépelliculage et polissage, assure l'aseptisation, la cuisson, la conservation, l'expansion, et rend cet aliment de haute qualité disponible pour une consommation immédiate.

Les produits alimentaires qui conviennent, à titre de produits de départ, aux fins de l'invention, sont de nature variée ; ce sont par exemple des produits alimentaires dont l'utilisation est limitée du fait qu'ils contiennent des substances anti-nutritionnelles ou toxiques, des flaveurs désagréables ou des impuretés diverses, ou des produits alimentaires dont la digestibilité est perturbée par un ou plusieurs de leurs constituants (par exemple pellicules de graines, amidons...).

A titre d'exemples de produits alimentaires appropriés, on citera :

1. les graines oléagineuses ou protéagineuses et les céréales, telles que blé, orge, maïs, pois, féveroles, lentilles, haricots, arachide, soja, colza, tournesol, lupin, riz ;

2. les plantules, telles que blé, luzerne ;

3. les racines et les tubercules, par exemple les betteraves sucrières, carottes, pommes de terre, manioc ;

4. les microorganismes, tels que *Trichoderma album, Geotrichum candidum, Saccharomyces cerevisiae* ;

5. les farines et les tourteaux, tels que ceux de blé, maïs, pois, soja, colza, arachide, concentrat de luzerne, fécule de pommes de terre, farine de manioc ;

6. les pulpes, telles que les pulpes de betteraves, pulpes d'oranges ;

7. les pâtes, par exemple les pâtes de farine de blé, pâte de tourteau de soja.

Comme on l'a indiqué précédemment, le procédé selon l'invention consiste tout d'abord en une détermination préalable, sur un échantillon du produit à traiter, des caractéristiques diélectriques du produit qui sont représentatives des états dudit produit en fonction des paramètres d'irradiation et en particulier de la durée de l'irradiation à une fréquence et une puissance déterminées.

Cette détermination des caractéristiques diélectriques peut être réalisée avec tous moyens appropriés pour la mesure de telles caractéristiques, à savoir l'angle de perte tg $\delta$ (tg $\delta = \varepsilon''/\varepsilon'$), la perméabilité relative $\varepsilon'_r$ ($\varepsilon'/\varepsilon^\circ$) et le facteur de pertes $\varepsilon''$.

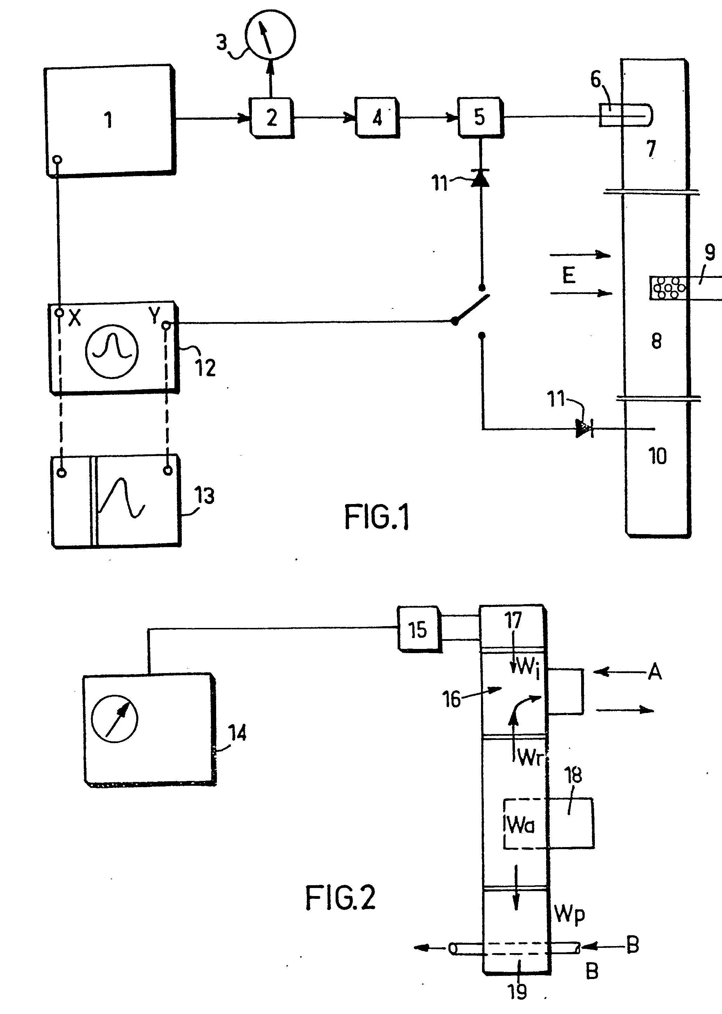

On donnera ci-après un exemple illustratif d'un dispositif approprié pour une telle détermination. Ce dispositif, qui a été utilisé pour les essais relatés ci-après, est représenté sur la figure 1 et comprend : un générateur UHF (1) (2,45 GHz balayé à ± 25 MHz) ; (2) un bi-coupleur 20 dB ; (3) un fréquencemètre ; (4) un filtre passe-bas ; (5) un circulateur ; (6) une sonde ; (7) un guide d'ondes de transition ; (8) une cavité de mesure ; (9) une cellule ; (10) une charge adaptée ; (11) deux détecteurs à cristal ; (12) un oscilloscope et (13) une table X-Y.

En vue des déterminations préalables, on soumet des échantillons du produit à traiter à une irradiation par micro-ondes dans un applicateur à guide d'onde progressive excité dans le mode $TE_{01}$ ou en cavité multimodes pendant un temps donné, à une fréquence et une puissance déterminées, et on détermine ensuite les caractéristiques diélectriques des échantillons irradiés, la détermination étant effectuée à la même température que le produit témoin, à savoir le produit non traité.

On note pour les échantillons, avant irradiation et pour des durées différentes d'irradiation :

— la fréquence de résonance ($f_i$)

— l'angle de pertes tg $\delta$

— la perméabilité relative $\varepsilon'_r$

— le facteur de pertes $\varepsilon''$

— la puissance dissipée calculée ($P_c$) en watts/g selon la formule indiquée précédemment.

Compte tenu de ces données, on détermine pour chaque variation des caractéristiques diélectriques l'état du produit. Connaissant les paramètres de l'état désiré du produit à traiter, on peut alors procéder au traitement proprement dit en utilisant ces paramètres. En effet, connaissant le facteur de perte de l'état désiré, on pourra alors déterminer, pour une fréquence et une longueur d'ondes données (par exemple f = 2 450 MHz et $\lambda^\circ$ = 12,2 cm), la valeur du champ électrique en relation avec la puissance micro-ondes émise par le générateur de micro-ondes couplé avec l'applicateur de micro-ondes qui est le réceptacle dans lequel le produit alimentaire est traité par les micro-ondes.

Bien que les conditions dans lesquelles doit être réalisée l'irradiation dépendent des paramètres de l'état désiré du produit, on indiquera que pour l'ensemble des produits alimentaires ci-dessus la puissance électrique à utiliser se situe entre environ 0,5 et 30 watts/cm³ de produit et est en général de l'ordre de 3 watts/cm³.

Pour les paramètres correspondant à un état désiré du produit, on a constaté des variations de la puissance absorbée et des élévations instantanées de la température. Ces variations ou élévations ont été suivies par des mesures thermiques effectuées par calorimétrie. Pour effectuer ces mesures, on pourra utiliser pour l'irradiation un dispositif approprié couplé avec des moyens de mesures thermiques, par exemple le dispositif de la figure 2 constitué d'une alimentation (14) puissance 1 000 W réglable, d'un magnétron YJ 1 500 (15), d'un circulateur à ferrite (16), d'un guide d'ondes de transition (17), d'une cavité de mesure (18) et d'une charge adaptée 1 kW (19).

Les mesures thermiques permettent de connaître exactement l'énergie nécessaire et suffisante pour obtenir l'état désiré. L'énergie absorbée est déterminée en fonction de l'énergie incidente (source) et de l'énergie non absorbée par le produit suivant l'équation :

$$Wa = Wi - (Wr + Wp)$$

dans laquelle Wa = énergie absorbée par le produit
Wi = énergie incidente
Wr = énergie réfléchie
Wp = énergie dissipée dans le système applicateur.

Connaissant la puissance absorbée on pourra calculer les élévations de température dans le produit, si on connaît la chaleur spécifique dudit produit, à l'aide des deux équations ci-dessous :

$$Wa = M \cdot Cs \cdot \triangle Q/0,24 \, t$$
$$\triangle Q = Wa(0,24 \, t)/M \cdot Cs$$

M = masse, en grammes
Cs = chaleur spécifique du produit
$\triangle Q$ = élévation de température, en degrés centigrades
t = temps en secondes.

La mise en œuvre du procédé selon l'invention nécessite un générateur de micro-ondes et un applicateur de micro-ondes.

De façon générale, le générateur est constitué (a) d'une alimentation transformant le courant du secteur en courant stabilisé redressé à tension élevée (b) d'un tube émetteur d'ondes (magnétron ou klystron), (c) d'un système de refroidissement du tube émetteur. Selon la puissance micro-ondes nécessaire, on pourra utiliser un générateur puissant ou une multitude de générateurs de faible puissance.

Selon la taille, la forme, la nature (solide, pâte, liquide) des produits à traiter, les débits, les temps de traitement désirés, etc., l'applicateur sera un tunnel, un four, ou bien des guides plongeants à fentes ou des cavités de dimensions et surfaces variables.

Le couplage judicieux du générateur sur l'applicateur permettra les meilleurs transferts de chaleur et assurera les meilleurs rendements. Un dispositif de traitement thermique dans lequel le générateur et l'applicateur sont judicieusement couplés est décrit dans la demande de brevet FR n° 80 05 607 déposée le 13 Mars 1980 au nom de Joël SOULIER et intitulée « Nouveau dispositif pour le traitement thermique de matières en poudre ou en grains ». Un tel dispositif est particulièrement approprié aux fins de l'invention.

Les micro-ondes présentent des avantages considérables qui sont énumérés ci-après :

— l'énergie micro-ondes est instantanément disponible, elle est transmissible à distance, elle se propage dans des atmosphères variées (sous vide, sous pression, en ambiances froide, chaude ou ventilée, etc.), elle est économe (pas de préchauffage, pas de déperdition), elle n'est pas polluante (pas d'élévation de la température environnante), la régulation et l'asservissement de cette énergie sont aisés.

— le traitement des produits par des micro-ondes est bref du fait d'un transfert immédiat,

— le chauffage des produits est homogène dans toute la masse,

— les températures désirées sont obtenues sans préchauffage, ni surchauffe ou déperdition.

— les installations modulaires, de taille artisanale ou industrielle, sont faciles à réaliser en fonction des produits et des quantités à traiter,

— l'inclusion d'un traitement micro-ondes dans une chaîne technologique est aisée du fait de la brièveté du traitement.

— les produits peuvent être traités en l'état, leur excitation ou réhydratation préalables ne sont pas nécessaires.

De plus, dans les conditions contrôlées de mise en œuvre du procédé de l'invention, l'irradiation permet une action spécifique sur des cibles données (substances anti-nutritionnelles ou toxiques, flaveurs, pellicules, parois cellulaires, etc.) sans dénaturer les autres constituants. Il est en effet important

**0 039 287**

de ne pas poursuivre l'irradiation lorsque l'état physico-chimique désiré du produit soumis à l'irradiation est atteint pour la bande de fréquence appliquée, car sinon le produit soumis à l'irradiation subirait « l'effet température » du rayonnement micro-ondes qui se manifesterait par une dénaturation ou dégradation des protéines ou autres valeurs nutritionnelles du produit alimentaire.

L'invention va être décrite plus en détail par les exemples illustratifs ci-après effectués en utilisant l'un des fours ci-après :

— Four expérimental à alimentation continue de 6 kW de puissance micro-ondes,
— Four expérimental de 1 kW de puissance micro-ondes.
— Four ménager de 750 W de puissance micro-ondes.
— Four ménager de 1 350 W de puissance micro-ondes.
Comme applicateur, on a utilisé des guides d'ondes type $TE_{01}$ ou une cavité multimodes.

### Exemple 1

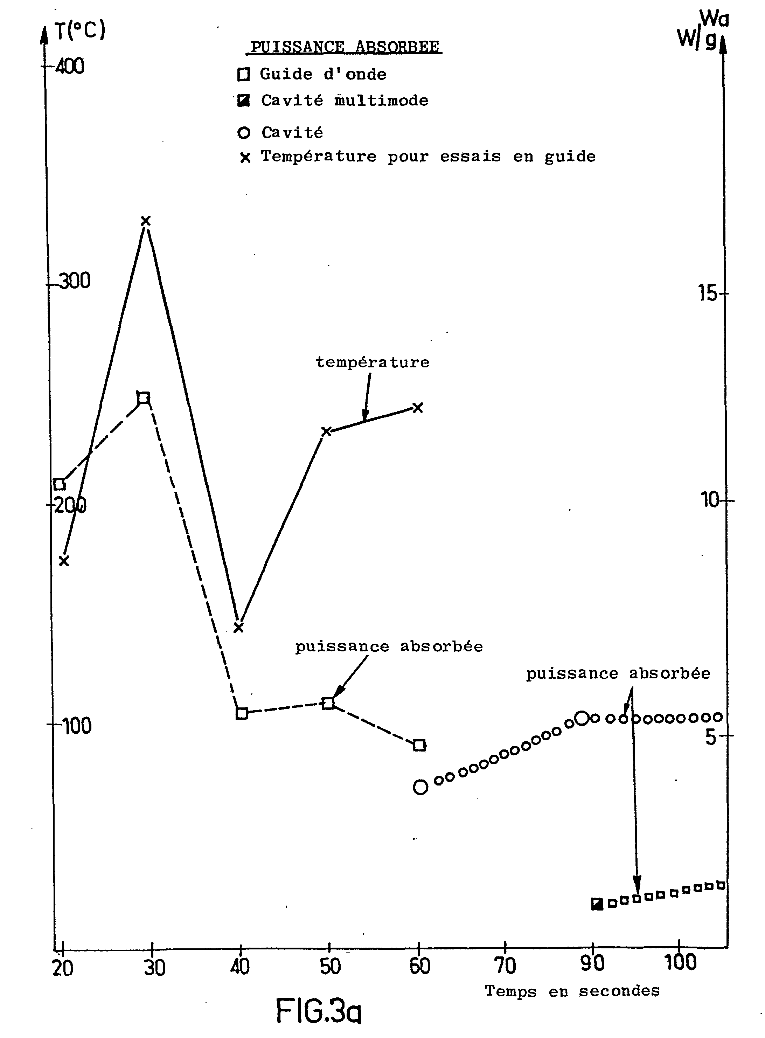

Dans un four expérimental de 1 000 W de puissance micro-ondes, muni d'un dispositif de mesures thermiques conforme à la figure 2, on a soumis à une irradiation par micro-ondes (f = 2 450 MHz), pendant des durées différentes, des échantillons de 1 kg de grains de blé. On a noté pour chaque temps d'irradiation les énergies incidente (Wi), réfléchie (Wr) et dissipée (Wp) et on a calculé l'énergie absorbée en J/g. On a tracé la courbe donnant la puissance absorbée en Watts/g en fonction du temps, ainsi que la température en fonction du temps. Ces courbes apparaissent sur la figure 3a sur laquelle le temps d'irradiation, en secondes, est en abscisses, la puissance absorbée Wa, exprimée en watts/g, est portée sur l'axe des ordonnées de droite et la température T sur l'axe des ordonnées de gauche.

On a ensuite procédé aux déterminations préalables des caractéristiques diélectriques en utilisant le dispositif selon la figure 1. Les mesures des caractéristiques diélectriques ont été effectuées à la même température que celles du produit témoin (produit non traité, courbe en pointillés). Les résultats obtenus figurent dans le tableau I ci-après.

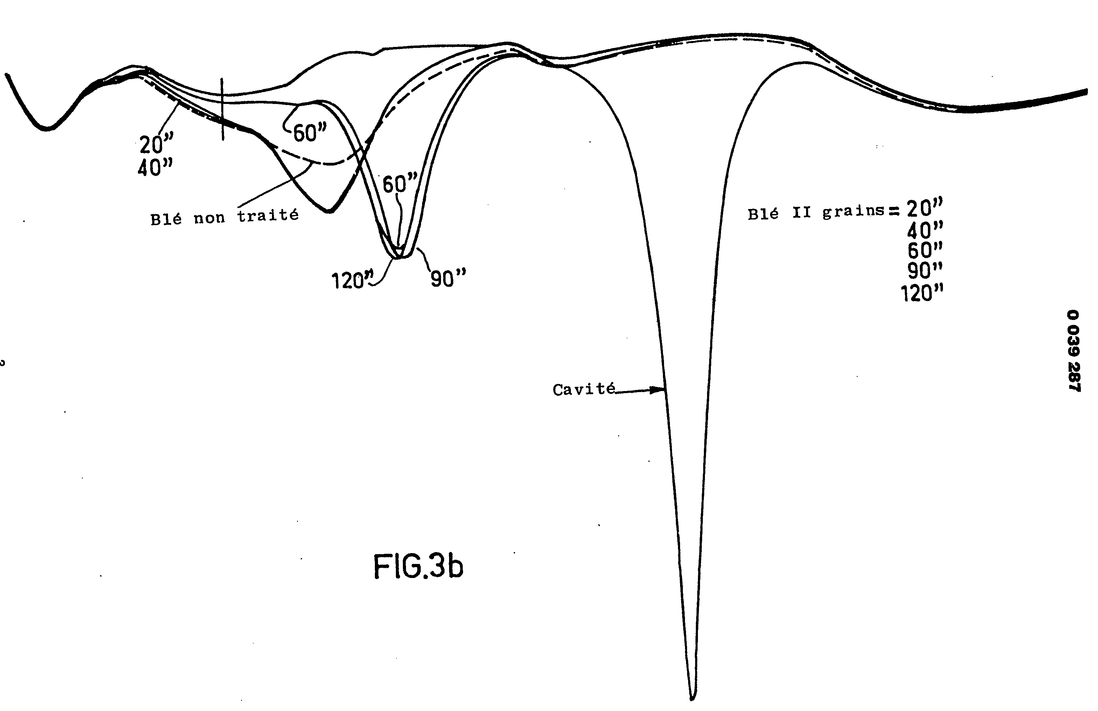

La figure 3b est l'enregistrement de la caractéristique diélectrique ($\varepsilon'r$) pour chaque temps d'irradiation, donnée par le dispositif 13 de la figure 1. Chaque courbe sur cette figure 3b correspond à un temps d'irradiation dans les conditions opératoires définies ci-dessus.

Les résultats du tableau I et la figure 3b montrent que les caractéristiques diélectriques du blé en grains évoluent en fonction des paramètres d'irradiation. On a constaté que, dans ce cas particulier, les caractéristiques diélectriques se stabilisent au-delà de 40 secondes et que la modification qui a eu lieu pour cette irradiation dans les conditions d'essais est une transformation de l'amidon. Le produit obtenu pour ce temps d'irradiation sera dénommé ci-après « amidon de blé cuit par micro-ondes ».

On a réalisé, dans les mêmes conditions opératoires, les déterminations préalables des caractéristiques diélectriques pour des échantillons de 1 kg d'orge grains et de tournesol grains.

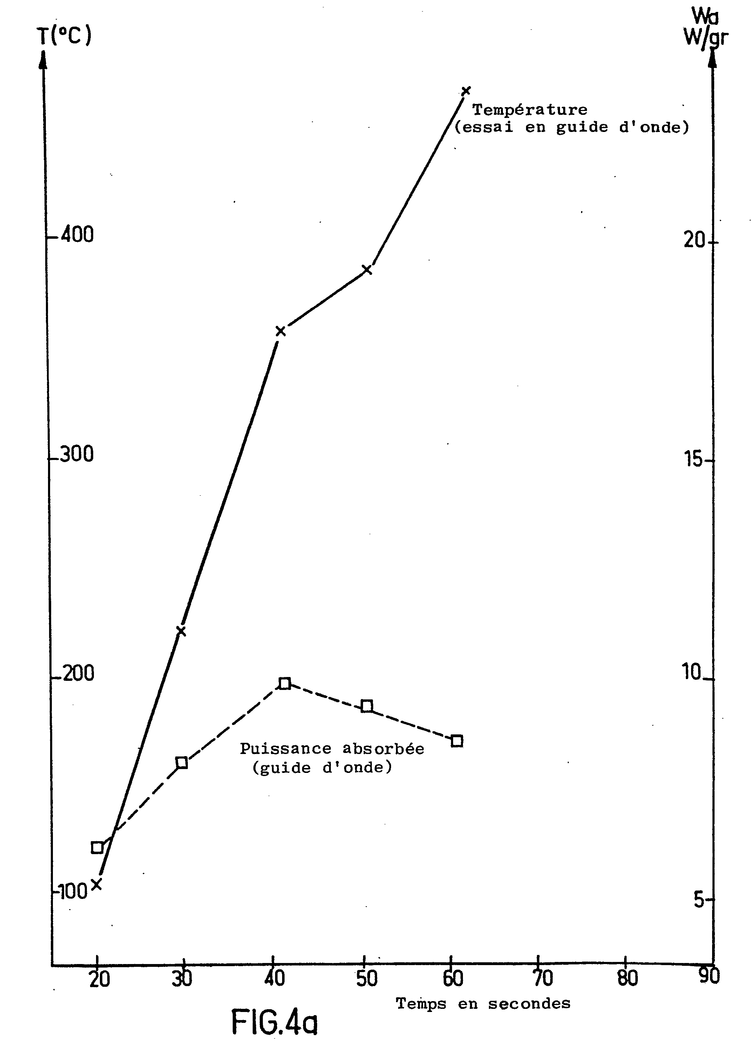

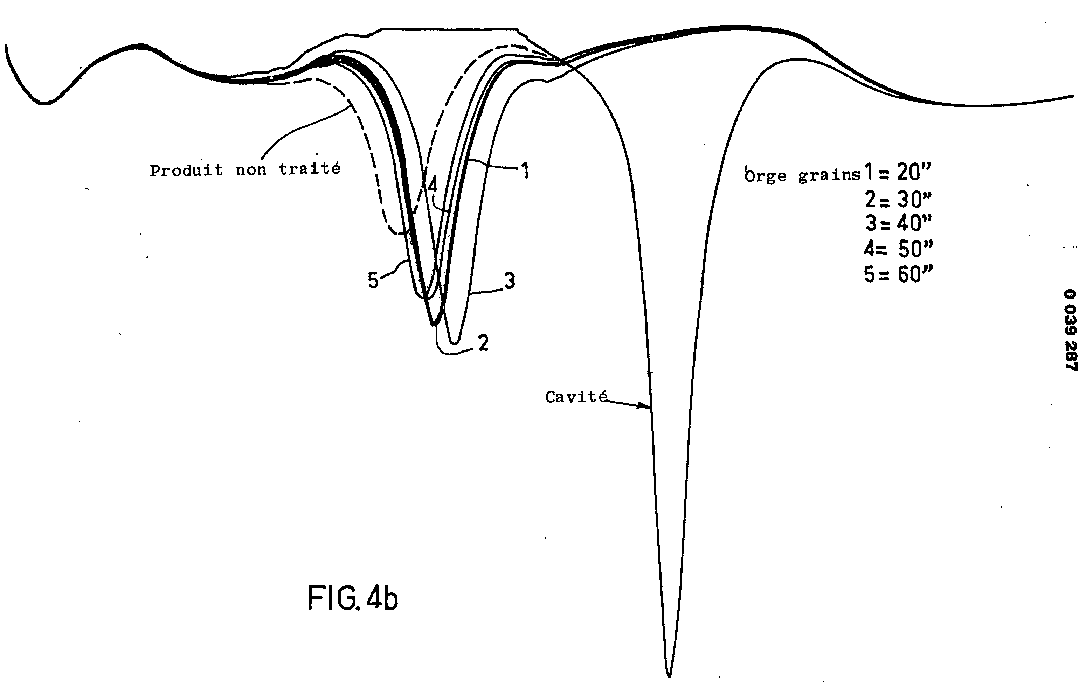

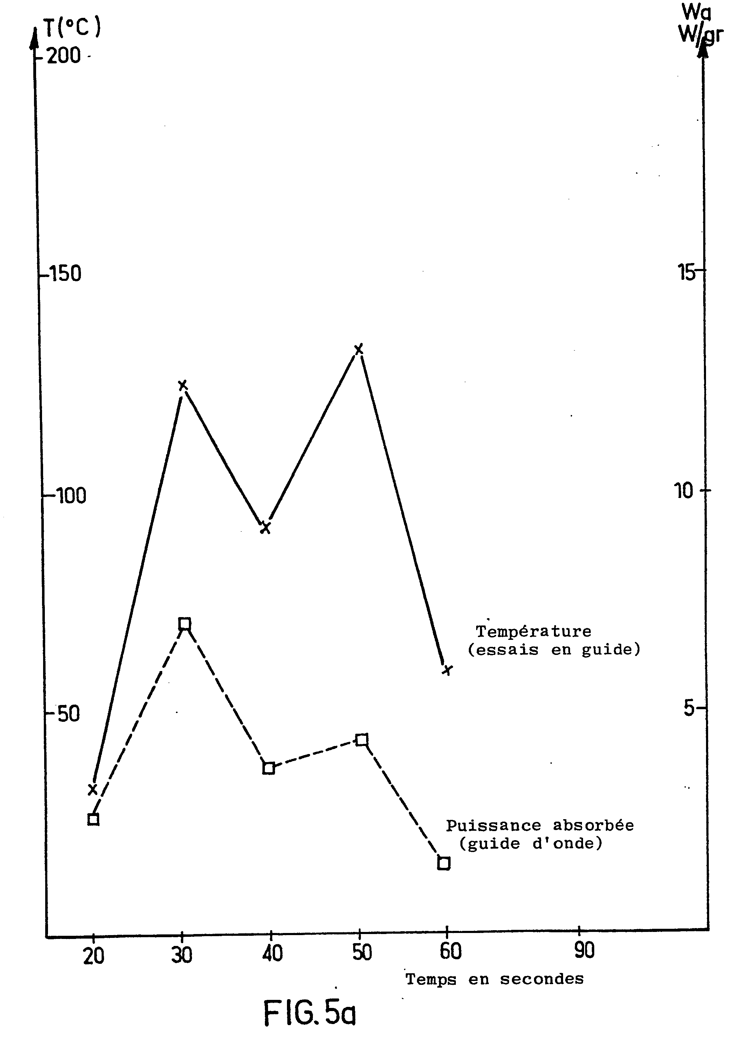

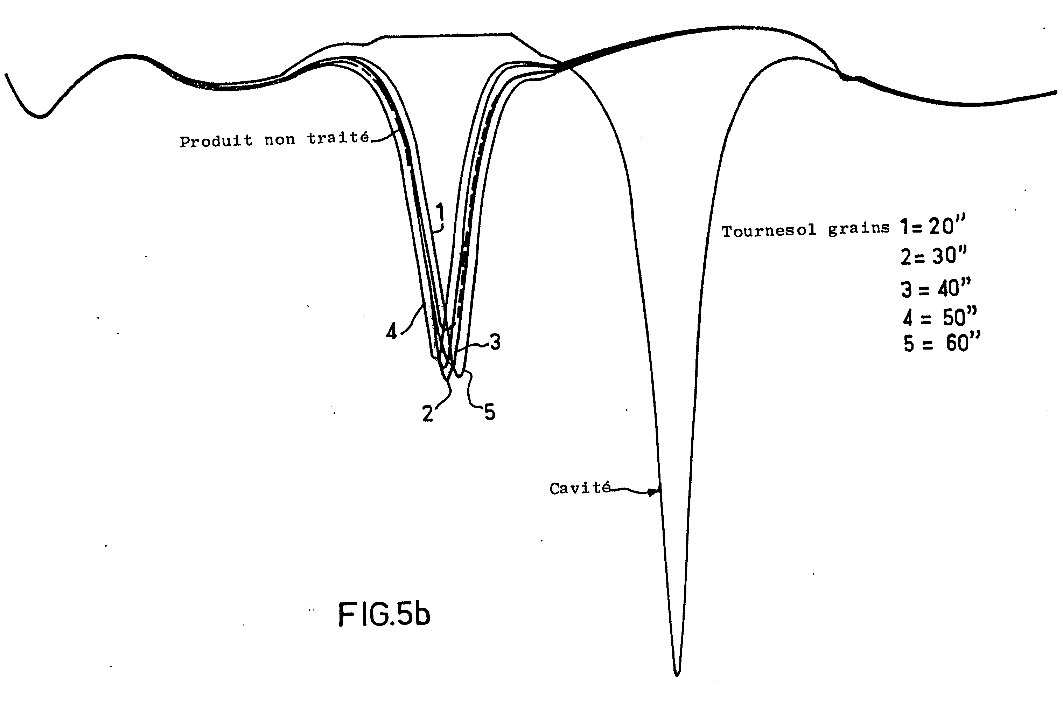

Les résultats obtenus sont consignés respectivement dans les tableaux II (orge) et III (tournesol) et sur les figures 4a et 4b (orge), 5a et 5b (tournesol). Compte tenu de ces déterminations, le traitement proprement dit de ces grains a consisté en une irradiation pendant 40 secondes pour l'orge grains et le tournesol.

(Voir Tableaux pages suivantes)

6

0 039 287

## TABLEAU I

Caractéristiques diélectriques des grains de blé en fonction du temps d'irradiation
à $f = 2\,450$ MHz pour une puissance de $1\,000$ W. Cavité multimodes

| t | $f_1$ | $\Delta f$ | $\Delta b$ | $Q_1$ | tg $\delta$ | $\varepsilon'$ | $\varepsilon''$ | écart % Pc-Pm | $\Delta\theta°C$ calculé | $\Delta\%C$ corrigé |
|---|---|---|---|---|---|---|---|---|---|---|
| 0 | 2429,23 | 32,98 | 9,70 | 17,50 | 0,057 | 2,276 | 0,130 | | | |
| 20 | 2429,42 | 32,78 | 6,98 | 29,16 | 0,0342 | 2,269 | 0,0778 | 0,28-1,82 | | |
| 30 | | | | | | | | | | |
| 40 | 2419,42 | 32,78 | 6,98 | 39,16 | 0,0342 | 2,269 | 0,0778 | 0,28-1,67 | | |
| 50 | | | | | | | | | | |
| 60 | 2435,82 | 26,38 | 5,01 | 50 | 0,097 | 2,01 | 0,0398 | 0,16-1,84 | 70 | |
| 90 | 2436,60 | 25,60 | 5,03 | 49,98 | 0,020 | 1,988 | 0,0397 | 0,16-1,76 | 277 | 127 |
| 120 | 2435,43 | 26,77 | 5,03 | 51,073 | 0,0195 | 2,03 | 0,0398 | 0,16-1,88 | 517 | 160 |

TABLEAU II

Caractéristiques diélectriques de l'orge grains en fonction du temps d'irradiation
à f = 2 450 MHz pour une puissance électrique de 1 000 W.

Guide d'ondes TE$_{01}$

| t(s) | f$_1$ | $\Delta$f | $\Delta$b | Q$_1$ | tg $\delta$ | $\varepsilon'$ | $\varepsilon''$ | écart % P$_c$-P$_m$ | $\Delta\Theta$°C calculé | $\Delta\Theta$°C corrigé |
|------|-------|-----------|-----------|-------|-------------|----------------|-----------------|---------------------|--------------------------|--------------------------|
| 0 | 2437,89 | 24,32 | 5,32 | 42,76 | 0,023 | 1,938 | 0,0453 | | | |
| 20 | 2440,74 | 21,47 | 4,56 | 59,79 | 0,0167 | 1,827 | 0,030 | 4,8-6,08 | 109 | Vap > 120 |
| 30 | 2441,12 | 21,09 | 4,56 | 59,33 | 0,0168 | 1,812 | 0,030 | 4,8-8,1 | 220 | Vap. |
| 40 | 2442,64 | 19,57 | 4,94 | 46,37 | 0,0215 | 1,753 | 0,039 | 6,2-9,9 | 358 | 286 |
| 50 | 2440,55 | 21,66 | 4,86 | 50,47 | 0,0198 | 1,834 | 0,036 | 5,7-8,6 | 388 | 310 |
| 60 | 2439,79 | 22,42 | 4,86 | 51,24 | 0,0195 | 1,864 | 0,036 | 5,6-8,7 | 473 | 378 |

## TABLEAU III

Caractéristiques diélectriques du tournesol grains en fonction du temps d'irradiation
à f = 2 450 MHz pour une puissance électrique de 1 000 W.

Guide d'ondes TE$_{01}$

| t | f$_1$ | $\Delta$ f | $\Delta$ b | Q$_1$ | tg$\delta$ | $\mathcal{E}'$ | $\mathcal{E}''$ | écart % P$_c$-P$_m$ | $\Delta\theta$ °C calculé | $\Delta\theta$ °C corrigé |
|---|---|---|---|---|---|---|---|---|---|---|
| 0 | 2441,88 | 20,33 | 5,13 | 42,96 | 0,0232 | 1,783 | 0,0415 | | | |
| 20 | 2440,63 | 21,58 | 4,37 | 68,07 | 0,0146 | 1,831 | 0,0269 | 4,2-2,8 | 33 | |
| 30 | 2441,69 | 20,52 | 4,37 | 66,63 | 0,015 | 1,790 | 0,0268 | 4,4-7 | 125 | |
| 40 | 2442,18 | 20,02 | 4,37 | 65,96 | 0,015 | 1,771 | 0,0268 | 4,4-3,8 | 91 | |
| 50 | 2440,85 | 21,35 | 4,37 | 67,77 | 0,0147 | 1,823 | 0,0268 | 4,3-4,4 | 132 | |
| 60 | 2442,83 | 13,38 | 4,37 | 65,08 | 0,0153 | 1,746 | 0,0268 | 4,5-1,45 | 51 | |

0 039 287

On a réalisé dans les mêmes conditions, les déterminations préalables des caractéristiques diélectriques pour les graines de maïs, de lupin, de pois, de haricots, de colza et de soja et on a noté que le traitement proprement dit, pour obtenir l'état désiré pour chaque produit, devait être effectué, compte tenu des paramètres correspondant à l'état désiré pour chaque produit, pendant :

90 secondes pour le maïs (graines)
30 secondes pour le lupin (graines)
40 secondes pour le haricot (graines)
40 secondes pour le pois (graines)
40 secondes pour le colza (graines)
40 secondes pour le soja (graines).

### Exemple 2

On a réalisé les déterminations préalables des caractéristiques diélectriques pour le lupin Kali sensiblement selon le même mode opératoire qu'à l'exemple 1 en utilisant soit un guide d'ondes $TE_{01}$ soit une cavité multimodes.

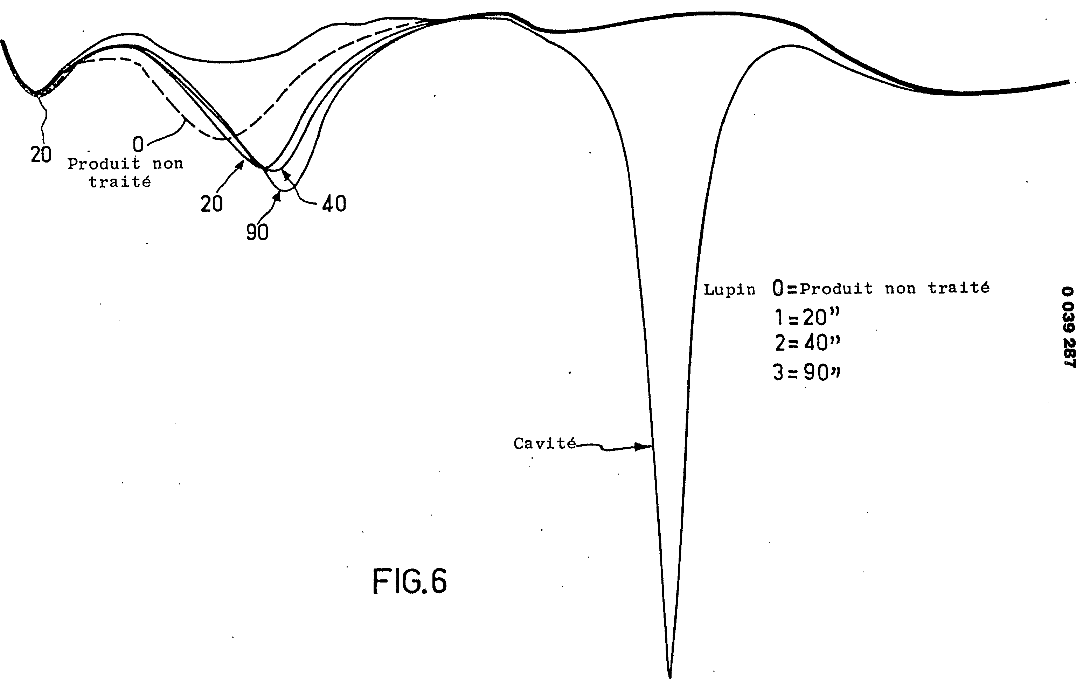

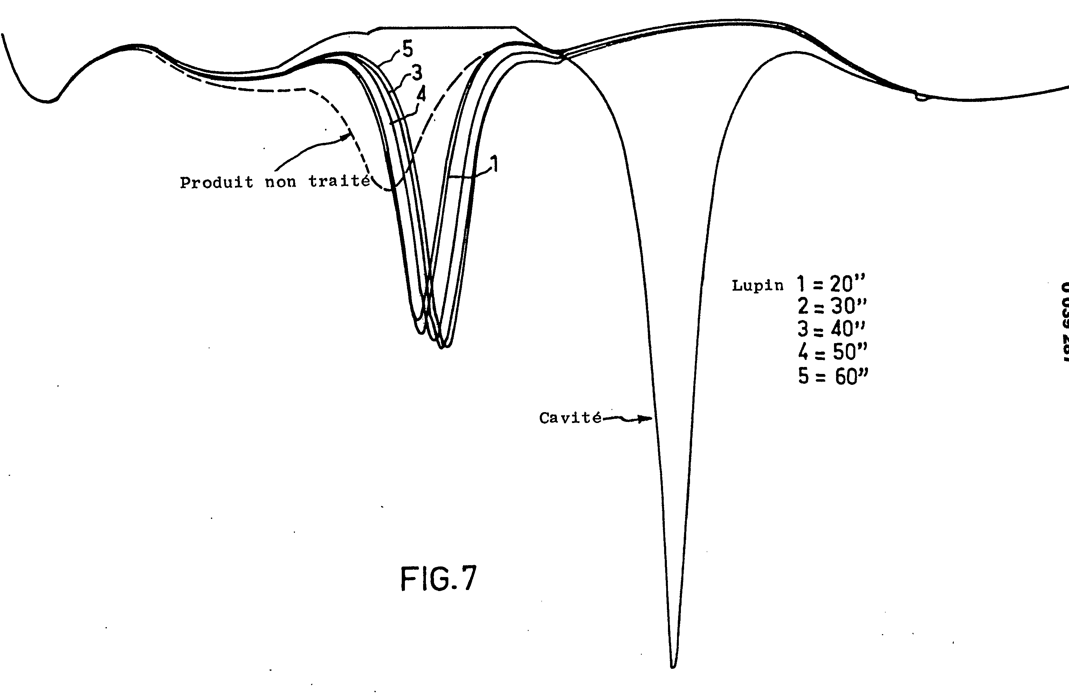

Les résultats obtenus sont indiqués dans les tableaux IV et V ci-après et les enregistrements de la caractéristique diélectrique ($\varepsilon'r$) figurent sur les figures 6 (cavité multimodes) et 7 (guide d'ondes $TE_{01}$).

Les résultats concernant le lupin montrent que les caractéristiques diélectriques varient en fonction de l'applicateur. Il est donc nécessaire pour chaque type d'appareil d'effectuer ces déterminations préalables.

### Exemple 3

On a utilisé du tourteau de colza et on a procédé aux déterminations préalables des caractéristiques diélectriques selon le mode opératoire défini à l'exemple 1.

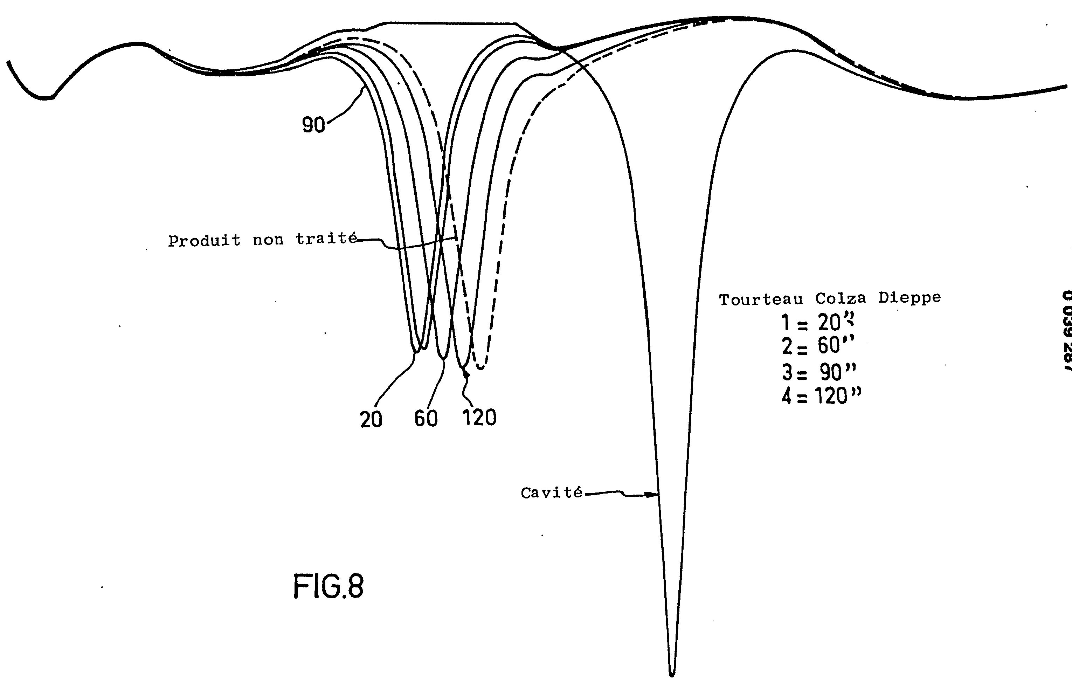

Les résultats obtenus figurent dans le tableau VI ci-après et l'enregistrement de la caractéristique diélectrique ($\varepsilon'r$) est représenté sur la figure 8.

(Voir Tableaux pages suivantes)

## TABLEAU IV

Caractéristiques diélectriques pour le lupin Kali, f = 2 450 MHz, puissance électrique
1 000 W.

Cavité multimodes

| t | $f_1$ | $\Delta f$ | $\Delta b$ | $Q_1$ | tg $\delta$ | $\varepsilon'$ | $\varepsilon''$ | Ecart % Pc-Pm |
|---|---|---|---|---|---|---|---|---|
| 0 | 2421,93 | 40,28 | 9,69 | 19,69 | 0,050 | 2,564 | 0,130 | |
| 20 | 2425,35 | 36,86 | 9,69 | 18,60 | 0,0537 | 2,429 | 0,130 | 0,44-1,69 |
| 40 | 2426,49 | 35,72 | 9,69 | 18,27 | 0,0547 | 2,384 | 0,130 | 0,45-1,73 |
| 90 | 2427,25 | 34,96 | 8,74 | 21 | 0,0475 | 2,354 | 0,112 | 0,39-1,83 |

TABLEAU V

Caractéristiques diélectriques pour le lupin Kali, f = 2 450 MHz ; puissance électrique :
1 000 W

Guide d'ondes $TE_{01}$

| t | $f_1$ | $\triangle f$ | $\triangle b$ | $Q_1$ | tg $\delta$ | $\varepsilon'$ | $\varepsilon''$ | écart % Pc-Pm |
|---|---|---|---|---|---|---|---|---|
| 0 | 2436,02 | 26,19 | 6,59 | 28,75 | 0,0347 | 2,011 | 0,0699 | |
| 20 | 2438,54 | 23,66 | 4,65 | 59,08 | 0,0169 | 1,913 | 0,0323 | 4,9-6,3 |
| 30 | 2438,73 | 23,47 | 4,26 | 76,69 | 0,0130 | 1,905 | 0,0248 | 3,8-5,9 |
| 40 | 2440,79 | 21,41 | 4,73 | 53,94 | 0,0185 | 1,825 | 0,0338 | 5,4-9,4 |
| 50 | 2440,09 | 22,11 | 5,04 | 46,50 | 0,0215 | 1,852 | 0,0398 | 6,2-1 |
| 60 | 2441,25 | 20,95 | 4,65 | 55,99 | 0,0178 | 1,807 | 0,0322 | 5,2-8 |

0 039 287

## TABLEAU VI

### Caractéristiques diélectriques du tourteau de colza

| t | $f_1$ | $\triangle f$ | $\triangle b$ | $Q_1$ | $t_g . \delta$ | $\mathcal{E}'$ | $\mathcal{E}''$ | écart % $P_c - P_m$ | $\Delta\theta°C$ cal-culé | $\Delta\theta°C$ cor-rigé |
|---|---|---|---|---|---|---|---|---|---|---|
| 0 | 2444,75 | 17,46 | 5,04 | 42,15 | 0,0237 | 1,671 | 0,0396 | | | |
| 20 | 2438,73 | 23,47 | 3,88 | | | 1,905 | 0,0175 | 0,08-2,13 | | |
| 60 | 2441,25 | 20,95 | 4,65 | | 0,0178 | 1,867 | 0,0322 | 0,15-2,08 | | |
| 90 | 2439,31 | 22,89 | 4,0 | | 0,0131 | | 0,0298 | 0,11-2,05 | | |
| 120 | 2442,81 | 19,40 | 4,75 | | 0,0204 | 1,746 | 0,0360 | 0,17-2,10 | | |

Le traitement proprement dit a consisté en une irradiation pendant 120 secondes
dans les conditions déterminées en cavité multimodes

De la même façon on a procédé à la détermination préalable des caractéristiques diélectriques d'un nombre important de produits selon le mode opératoire de l'exemple 1 avec une cavité multimodes ou un guide d'ondes. On a noté ci-après les variations maximales de $\varepsilon'_r$ ($\Delta\varepsilon'_r$ max.) et l'énergie en joules nécessaire pour atteindre l'état désiré de chaque produit.

(Voir Tableaux pages suivantes)

| Produits | N° | Cavité multimodes | | Guide d'ondes | |
|---|---|---|---|---|---|
| | | $\Delta\varepsilon'_{r\,max}$ | E.Joules | $\Delta\varepsilon_r{}'max$ | $E_M/E_M.J$ |
| Paille brute | 1 | 0,08 | 120 | | |
| Farine de blé | 2 | 0,171 | 248 | | |
| | 32 | 0,052 | 252 | | |
| Concentrat de luzerne | 4 | 0,045 | 184 | | |
| Isolat de Soja -$B_1$ cru | 5 | 0,044 | 228 | | |
| Isolat de Soja -$A_1$ cuit | 6 | 0,015 | 134 | | |
| Tourteau de Colza Dieppe | 7 | 0,015 | 228 | | |
| | 30 | 0,075 | 252 | | |
| Tourteau de Colza cru 0 Thio | 8 | 0,096 | 228 | | |
| Tourteau Soja 200 | 9 | 0,051 | 79 | | |
| Farine de pois dépelliculée | 11 | 0,008 | 57 | | |

0 039 287

| Produits | N° | Cavité multimodes | | Guide d'ondes | |
|---|---|---|---|---|---|
| | | $\Delta \mathcal{E}'_{r}max$ | E.Joules | $\Delta \mathcal{E}_{r}'max$ | $E_M/E_M.J$ |
| Maïs | 23 | 0,35 | 192 | | |
| | 13 | | | 0,774 | 144 |
| Farine de pois crue | 25 | 0,20 | 169 | | |
| Colza grains | 26 | 0,163 | 114 | | |
| | 16 | | | 0 | 1108/520 |
| Colza 0 thioglycosides dégraissé | 27 | 0,045 | 237 | | |
| Fécule de pomme de terre | 28 | 0,186 | 164,7 | | |
| Lupin Kali | 29 | 0,21 | 164 | | |
| | 18 | | | 0,20 | 480/126 |
| Blé II grains | 31 | 0,288 | 158 | | |

0 039 287

| Produits | N° | Cavité multimodes | | Guide d'ondes | |
|---|---|---|---|---|---|
| | | $\triangle\varepsilon'_{r\,max}$ | E.Joules | $\triangle\varepsilon_{r'\,max}$ | $= E_M/E_M.J$ |
| Plantule de blé | 12 | | | | 600/82 |
| Tournesol graines | 14 | | | 0,012 | 152/56 |
| Orge graines | 15 | | | 0,185 | 396/121 |
| Soja graines | 17 | | | 0,189 | 180/54 |
| Colza oléaqueux | 19 | | | 0,166 | 5 16/92 |
| Pois grains | 20 | | | 0,083 | 243/184 |
| Lentilles graines | 21 | | | 0,076 | 650/320 |
| Haricots graines | 22 | | | 0,114 | 129/20 |
| Paille sodée | 3 | 0,049 | 141 | | |
| | 24 | 0,040 | 126 | | |

0 039 287

### Exemple 4

Valeur nutritionnelle pour le rat des produits alimentaires traités par les micro-ondes selon le procédé de l'invention comparée aux produits crus et cuits à la vapeur

Les expériences nutritionnelles ont été réalisées sur jeunes rats mâles sevrés de race Sprague Dawley ; la durée de l'expérience a été de 17 jours et le taux de protéines dans les aliments de 10 %. Chaque lot expérimental comportait 20 animaux.

Les compositions des aliments, les poids moyens des rats, les ingérés, les G M Q (gain de poids moyen quotidien par animal) et les C E P (gain de poids/quantités de protéines ingérées) figurent dans les tableaux VII et VIII ci-après.

L'analyse de ces tableaux montre que l'irradiation par micro-ondes selon l'invention valorise considérablement les farines protéagineuses et augmente aussi la digestibilité des amidons. Le traitement par micro-ondes paraît plus efficace que la cuisson à la vapeur. Dans le cas du colza et du lupin, la destruction des substances anti-nutritionnelles n'est pas totale, alors que le colza sans thioglycosides se détoxifie bien.

(Voir Tableaux pages suivantes)

TABLEAU VII : EXPÉRIENCE NUTRITIONNELLE — COMPOSITION DES ALIMENTS

| REGIME | Caséine lactique | Tourteau de soja cru | Tourteau de soja cuit du commerce | Tourteau de soja cuit par microondes | Tourteau de colza cru | Tourteau de colza cuit du commerce | Tourteau de colza cuit par microondes | Tourteau de colza sans thioglycosides cru | Tourteau de colza sans thioglycosides cuit par micro-ondes |
|---|---|---|---|---|---|---|---|---|---|
| Source protéique | 12 | 20 | 20 | 20 | 28 | 28 | 28 | 27 | 27 |
| Amidons divers | - | - | - | - | - | - | - | - | - |
| Amidon de maïs cuit | 53,75 | 46,75 | 46,75 | 46,75 | 39,70 | 39,70 | 39,70 | 40,70 | 40,70 |
| Saccharose | 20 | 20 | 20 | 20 | 20 | 20 | 20 | 20 | 20 |
| Huile d'arachide | 8 | 8 | 8 | 8 | 8 | 8 | 8 | 8 | 8 |

TABLEAU VII (suite) : EXPERIENCE NUTRITIONNELLE — COMPOSITION DES ALIMENTS

| REGIME | Caséine lactique | Tourteau de soja cru | Tourteau de soja cuit du commerce | Tourteau de soja cuit par micro-ondes | Tourteau de colza cru | Tourteau de colza cuit du commerce | Tourteau de colza cuit par micro-ondes | Tourteau de colza sans thioglycosides cru | Tourteau de colza sans thioglycosides cuit par mi-crondes |
|---|---|---|---|---|---|---|---|---|---|
| Cellulose | 2 | 1 | 1 | 1 | 0 | 0 | 0 | 0 | 0 |
| Complément vitaminique et minéral | 4 | 4 | 4 | 4 | 4 | 4 | 4 | 4 | 4 |
| DL méthionine | 0,25 | 0,25 | 0,25 | 0,25 | 0,15 | 0,15 | 0,15 | 0,15 | 0,15 |
| L Lysine HCl | 0 | 0 | 0 | 0 | 0,15 | 0,15 | 0,15 | 0,15 | 0,15 |
| L Thréonine | 0 | 0 | 0 | 0 | 0 | 0 | 0 | 0 | 0 |

0 039 287

TABLEAU VII (suite) : EXPERIENCE NUTRITIONNELLE — COMPOSITION DES ALIMENTS

| REGIME | Farine de pois crue | Farine de pois cuite par micro-ondes | Farine de fève-roles crue | Farine de fève-roles cuite par micro-ondes | Farine de lupin crue | Farine de lupin cuite par micro-ondes | Amidon de blé cru | Amidon de blé cuit par micro-ondes | Amidon de maïs cru | Amidon de maïs cuit du commerce | Amidon de maïs cuit par micro-ondes |
|---|---|---|---|---|---|---|---|---|---|---|---|
| Source protéique | 40 | 40 | 33 | 33 | 23 | 23 | 12 | 12 | 12 | 12 | 12 |
| Amidon divers | - | - | - | - | - | - | 53,75 | 53,75 | 53,75 | 53,75 | 53,75 |
| Amidon de Maïs cuit | 27,65 | 27,65 | 34,60 | 34,60 | 44,25 | 44,25 | - | - | - | - | - |
| Saccharose | 20 | 20 | 20 | 20 | 20 | 20 | 20 | 20 | 20 | 20 | 20 |
| Huile d'arachide | 8 | 8 | 8 | 8 | 8 | 8 | 8 | 8 | 8 | 8 | 8 |

0 039 287

TABLEAU VII (suite) : EXPERIENCE NUTRITIONNELLE — COMPOSITION DES ALIMENTS

| REGIME | Farine de pois crue | Farine de pois cuite par micro-ondes | Farine de fève-roles crue | Farine de fève-roles cuite par micro-ondes | Farine de lupin crue | Farine de lupin cuite par micro-ondes | Amidon de blé cru | Amidon de blé cuit par micro-ondes | Amidon de maïs cru | Amidon de maïs cuit du commerce | Amidon de maïs cuit par micro-ondes |
|---|---|---|---|---|---|---|---|---|---|---|---|
| Cellulose | 0 | 0 | 0 | 0 | 0 | 0 | 2 | 2 | 2 | 2 | 2 |
| Complément vitaminique et minéral | 4 | 4 | 4 | 4 | 4 | 4 | 4 | 4 | 4 | 4 | 4 |
| DL méthionine | 0,35 | 0,35 | 0,40 | 0,40 | 0,45 | 0,45 | 0,25 | 0,25 | 0,25 | 0,25 | 0,25 |
| L Lysine HCl | 0 | 0 | 0 | 0 | 0,15 | 0,15 | 0 | 0 | 0 | 0 | 0 |
| L Thréonine | 0 | 0 | 0 | 0 | 0,15 | 0,15 | 0 | 0 | 0 | 0 | 0 |

TABLEAU VIII : EXPERIENCE NUTRITIONNELLE — RESULTATS

0 039 287

| REGIME | Caséine lactique | Tourteau de soja cru | Tourteau de soja cuit du commerce | Tourteau de soja cuit par micro-ondes | Tourteau de colza cru X | Tourteau de colza cuit du commerce | Tourteau de colza cuit par micro-ondes | Tourteau de colza sans thioglyco-sides cru | Tourteau de colza sans thioglycosi-des cuit par mi-croondes |
|---|---|---|---|---|---|---|---|---|---|
| Poids moyen des rats au départ (en g) | 56 | 56 | 56 | 56 | 56 | 56 | 56 | 56 | 56 |
| Poids moyen des rats | 149 | 67 | 124 | 140 | 61 | 70 | 102 | 95 | 117 |
| Ingérés/J/al (en g) | 12,0 | 5,9 | 11,2 | 12,0 | 3,6 | 4,7 | 8,5 | 9,7 | 10,5 |
| G M Q | 5,4 | 0,64 | 4,0 | 4,9 | 0,29 | 0,82 | 2,7 | 2,3 | 3,5 |
| C E P | 4,5 | 1,0 | 3,2 | 4,0 | 0,8 | 1,7 | 3,1 | 2,3 | 3,3 |

X 5 animaux sont morts au cours de l'expérience

TABLEAU VIII (suite) : EXPÉRIENCE NUTRITIONNELLE — RÉSULTATS

| REGIME | Farine de pois crue | Farine de pois cuite par micro-ondes | Farine de fèvero-les crue | Farine de fèvero-les cuite par mi-croondes | Farine de lupin crue XX | Farine de lupin cuite par micro-ondes | Amidon de blé cru | Amidon de blé cuit par micro-ondes | Amidon de maïs cru | Amidon de maïs cuit du commerce | Amidon de maïs cuit par micro-ondes |
|---|---|---|---|---|---|---|---|---|---|---|---|
| Poids moyen des rats au départ (en g) | 56 | 56 | 56 | 56 | 56 | 56 | 56 | 56 | 56 | 56 | 56 |
| Poids moyen des rats après 17 jours (en g) | 103 | 135 | 96 | 127 | 63 | 108 | 141 | 155 | 142 | 151 | 154 |
| Ingérés/J/al (en g) | 10,0 | 12,5 | 9,8 | 12,0 | 4,3 | 8,5 | 12,4 | 12,0 | 12,3 | 12,1 | 12,5 |
| G M Q | 2,7 | 4,6 | 2,3 | 4,1 | 0,41 | 3,0 | 5,0 | 5,8 | 5,0 | 5,5 | 5,7 |
| C E P | 2,7 | 3,6 | 2,3 | 3,4 | 0,95 | 3,4 | 4,0 | 4,8 | 4,0 | 4,5 | 4,5 |

XX 7 animaux sont morts au cours de l'expérience

**0 039 287**

Exemple 5

Aseptisation des produits alimentaires par l'irradiation aux micro-ondes selon l'invention.

Tous les produits biologiques récoltés comportent des quantités plus ou moins importantes d'impuretés parmi lesquelles figurent les microorganismes et les insectes qui se développent, lorsque les conditions leur sont favorables, et altèrent plus ou moins profondément les stocks. Le traitement par micro-ondes selon l'invention des graines entreposées permet l'éradication des insectes et une diminution importante des populations microbiennes.

a) La désinsectisation des graines par les micro-ondes.

Les essais qui visaient à détruire les charançons et les bruches ont été réalisés sur des lots de graines de blé, de pois, de haricots et de lentilles.

Les déterminations préalables des caractéristiques diélectriques effectuées sur ces lots dans les conditions opératoires définies à l'exemple 1 ont permis de déterminer que l'irradiation devait être effectuée en fonction de l'état désiré (graines désinfectées) pendant 30 à 50" selon les graines. La détermination du nombre d'insectes vivants (tableau IX) sur chaque lot ainsi traité confirme une désinfection.

(Voir Tableau IX p. 26)

25

TABLEAU IX

| | | Graines traitées | | | |
|---|---|---|---|---|---|
| | | Blé | Pois | Haricots | Lentilles |
| Lots témoins | | 100 | 100 | 100 | 100 |
| Durée d'application des micro-ondes | 10" | 90 | 82 | 75 | 65 |
| | 30" | 15 | 5 | 5 | 0 |
| | 50" | 0 | 0 | 0 | 0 |
| | 90" | 0 | 0 | 0 | 0 |

0 039 287

b) Le contrôle des flores microbiennes.

De nombreux microorganismes s'installent sur les plantes en état de végétation, puis continuent leur développement au cours des stockages, en compagnie avec les germes des surinfections plus tardives. Ces flores dégradent de nombreux constituants et excrètent des toxines qui manifesteront des effets néfastes dans les élevages et sur la santé humaine.

Des essais de contrôle des flores contaminant les graines entreposées ont été effectués par les micro-ondes. Les résultats obtenus sur le maïs prouvent l'action bénéfique du procédé de l'invention. Il faut souligner qu'il est indispensable d'évacuer, pendant le traitement, la vapeur d'eau qui, en se condensant, permettrait les réinfections.

## EFFETS DE L'APPLICATION DES MICRO-ONDES SUR DES LOTS DE GRAINS DE MAÏS

### NOMBRE DE SPORES VIVANTES POUR 10 G DE GRAINS

| | | Germes identifies | | | | | | |
|---|---|---|---|---|---|---|---|---|
| | | Fusarium graminearum | Aspergillus flavus | Penicillium patulum | Penicillium cyclopium | Trichothecium roseum | Rizopus nigricans | Bacillus cereus |
| Lots témoins | | 10000 | 3000 | 3000 | 5000 | 500 | 100 | 12000 |
| Lots traités aux micro-ondes | 10" | 6000 | 3000 | 2000 | 3000 | 500 | 50 | 12000 |
| | 30" | 1000 | 200 | 500 | 500 | 150 | 30 | 8000 |
| | 60" | 20 | 0 | 0 | 0 | 5 | 2 | 100 |
| | 90" | 0 | 0 | 0 | 0 | 0 | 0 | 5 |
| | 120" | 0 | 0 | 0 | 0 | 0 | 0 | 0 |

## Exemple 6

### Détoxification selon le procédé de l'invention

La plupart des facteurs anti-nutritionnels couramment contenus dans les denrées alimentaires sont thermostables et on a démontré qu'ils étaient facilement dénaturés par l'application des micro-ondes selon le procédé de l'invention. Des essais de détoxification de tourteaux d'arachides riches en aflatoxines thermostables ont été réalisés dans des conditions opératoires sensiblement identiques à celles définies dans l'exemple 1. Les résultats consignés dans le tableau ci-dessous mettent en évidence une destruction importante de ces toxines.

EFFETS DES MICRO-ONDES SUR LA TENEUR DU TOURTEAU
D'ARACHIDE EN AFLATOXINES

| | TRAITEMENT PAR LES MICRO-ONDES | | | | | |
|---|---|---|---|---|---|---|
| | Té-moin | 10" | 50" | 90" | 150" | 240" |
| Tourteau d'arachi-de, aflatoxines (ppb) | 800 | 800 | 730 | 650 | 210 | 40 |

De ces résultats, il ressort que pour atteindre l'état désiré (détoxification) il y a lieu d'irradier le tourteau d'arachides considéré pendant 240 secondes pour obtenir une détoxification pratiquement totale.

Exemple 7

Thermolyse des microorganismes par le procédé selon l'invention

Les microorganismes figurent parmi les sources alimentaires destinées à l'homme et aux animaux. Leur valeur nutritionnelle est bonne lorsque les constituants cellulaires sont libérés ; pour cela, il faut désintégrer les cellules, car les parois et les membranes cellulaires sont des obstacles sérieux pour l'attaque enzymatique.

On a déterminé dans les conditions opératoires définies à l'exemple 1 les caractéristiques diélectriques sur trois germes alimentaires. Les résultats de détermination de caractéristiques diélectriques obtenus ont permis d'établir les temps d'irradiation en fonction des paramètres de l'état désiré (désintégration des cellules). Ces temps sont de 60 secondes pour le *Trichoderma album,* 190 secondes pour le *Geotrichum candidum* et le *Saccharomyces cerevisiae.* La détermination des germes vivants (tableau X) sur des lots traités pendant des temps différents corrobore les résultats obtenus. Tableau X

GERMES INTACTS, EN %.

| | | Trichoderma album | Geotrichum candidum | Saccharomyces cerevisiae |
|---|---|---|---|---|
| Traite-ment par les micro-ondes | 30" | 50 | 80 | 80 |
| | 60" | 0 | 25 | 15 |
| | 90" | 0 | 5 | 2 |
| | 150" | 0 | 0 | 0 |

Le procédé selon l'invention peut être mis en œuvre dans un récipient fermé sous pression augmentée, notamment pour éviter l'évaporation de l'eau ou d'autres constituants du produit à traiter.

Le procédé peut également être réalisé sous pression réduite, notamment pour faciliter l'évaporation de certains constituants nuisibles.

**Revendications**

1. Procédé de traitement de produits alimentaires destinés en particulier à l'alimentation animale en vue de l'amélioration de leur valeur nutritionnelle, consistant à soumettre lesdits produits alimentaires à une irradiation par micro-ondes, caractérisé en ce qu'on détermine au préalable sur un échantillon du produit à traiter les caractéristiques diélectriques, lesquelles sont représentatives des états du produit, en fonction des paramètres d'irradiation et en particulier de la durée d'irradiation à une fréquence et une puissance déterminées, et en ce qu'on conduit de manière contrôlée l'irradiation en vue du traitement proprement dit en tenant compte des résultats des déterminations préalables et en réalisant ladite irradiation avec les paramètres correspondant à l'état désiré dudit produit.

2. Procédé selon la revendication 1, caractérisé en ce que ledit produit alimentaire est choisi parmi les graines, les plantules, les racines et tubercules, les microorganismes, les farines et tourteaux, les pulpes et les pâtes.

3. Procédé selon l'une quelconque des revendications 1 ou 2, caractérisé en ce que la fréquence des micro-ondes est comprise entre 300 MHz et 30 GHz et en ce que la puissance électrique est comprise entre 0,5 et 30 watts/cm$^3$.

4. Procédé selon l'une quelconque des revendications 1 à 3, caractérisé en ce que la fréquence est de 2 450 MHz.

**Claims**

1. Process for the treatment of food products intended notably for animal feeding in order to improve their food value, consisting in subjecting said food products to microwave radiation, characterized in that its comprises the steps of previously determining on a sample of the product to be treated the dielectric characteristics, which are representative of the states of the product, as a function of the radiation parameters, and particularly of the duration of a radiation at a predetermined frequency and power, and of conducting the radiation in a controlled manner with a view to the treatment proper, bearing in mind the results of the preliminary determinations, and in effecting said radiation with the parameters corresponding to the desired state of said product.

2. A process according to claim 1, wherein said food product is selected from grains, plantlets, roots and tubers, micro-organisms, flours and cakes, pulps and mashes.

3. A process according to either of claims 1 or 2, wherein the frequency of the microwaves lies in the range of 300 MHz to 30 GHz and in that the electric power lies in the range of 0.5 to 30 watts/cm$^3$.

4. A process according to anyone of claims 1 to 3, wherein the frequency is 2 450 MHz.

**Ansprüche**

1. Verfahren zur Behandlung von Nahrungsmitteln, die insbesondere für die tierische Ernährung bestimmt sind, mit dem Ziel der Verbesserung ihres Nährwertes, bestehend darin, daß man die genannten Nahrungsmittel einer Bestrahlung durch Mikrowellen unterwirft, dadurch gekennzeichnet, daß man vorher an einer Probe des zu behandelnden Produkts die für die Beschaffenheit und den Zustand des Produkts repräsentativen dielektrischen Charakteristiken in Abhängigkeit von den Bestrahlungsparametern, insbesondere von der Dauer der Bestrahlung bei einer bestimmten Frequenz und Leistung bestimmt, und daß man in geregelter Weise die Bestrahlung im Hinblick auf die eigentliche Behandlung durchführt, wobei man die Ergebnisse der vorherigen Bestimmungen berücksichtigt und die genannte Bestrahlung mit den der gewünschten Beschaffenheit des genannten Produkts entsprechenden Parametern vornimmt.

2. Verfahren nach Anspruch 1, dadurch gekennzeichnet, daß das genannte Nahrungsmittel aus Saatgut, Keimlingen, Wurzeln und Knollen, Mikroorganismen, Mehlen und Preßrückständen, ausgelaugten Schnitzeln und breiartigen Massen ausgewählt ist.

3. Verfahren nach einem beliebigen der Ansprüche 1 oder 2, dadurch gekennzeichnet, daß die Frequenz der Mikrowellen zwischen 300 MHz und 30 GHz und die elektrische Leistung zwischen 0,5 und 30 W/cm$^3$ liegt.

4. Verfahren nach einem beliebigen der Ansprüche 1 bis 3, dadurch gekennzeichnet, daß die Frequenz 2 450 MHz beträgt.

FIG.1

FIG.2

FIG.3a

Blé II grains = 20"
40"
60"
90"
120"

Cavité

60"
90"
120"
60"

Blé non traité

20"
40"

FIG.3b

FIG.4a

Produit non traité

orge grains 1 = 20"
2 = 30"
3 = 40"
4 = 50"
5 = 60"

Cavité

FIG. 4b

0 039 287

**0 039 287**

FIG. 5a

Produit non traité

1

4

2    3

5

Tournesol grains 1 = 20"
2 = 30"
3 = 40"
4 = 50"
5 = 60"

Cavité

FIG.5b

0 039 287

20

0
Produit non
traité

20

90

40

Lupin  0=Produit non traité
       1=20"
       2=40"
       3=90"

Cavité→

FIG.6

FIG.7

Produit non traité

1

Cavité→

Lupin 1 = 20"
2 = 30"
3 = 40"
4 = 50"
5 = 60"

90

Produit non traité

20 60 120

Tourteau Colza Dieppe
1 = 20"
2 = 60"
3 = 90"
4 = 120"

Cavité

FIG.8